# EUROPEAN PATENT APPLICATION

(11) **EP 4 507 073 A1**
(43) Date of publication of application: **12.02.2025**
(21) Application number: 22936185.2
(22) Date of filing: 08.04.2022
(51) Int. Cl.: H01M 50/10, H01M 50/186, H01M 50/103

(54) **ELECTROCHEMICAL APPARATUS, BATTERY MODULE AND ELECTRONIC DEVICE**

(71) Applicant: Ningde Amperex Technology Limited, Zhangwan Town, Jiaocheng District Ningde City Fujian 352100 (CN)
(72) Inventor: LI, Xiaofeng, Ningde City, Fujian 352100 (CN); WANG, Zhanyong, Ningde City, Fujian 352100 (CN); GUO, Peipei, Ningde City, Fujian 352100 (CN); LIN, Sen, Ningde City, Fujian 352100 (CN)
(74) Representative: Icosa
(86) International application number: PCT/CN2022/085866
(87) International publication number: WO 2023/193247

(57) **Abstract**

This application relates to the technical field of energy storage, and in particular, discloses an electrochemical device, a battery module, and an electronic device. The electrochemical device includes an electrode assembly, a tab, and a housing. The housing includes a main body. The electrode assembly is accommodated in the main body. One end of the tab is connected to the electrode assembly. Another end of the tab extends out from a first lateral face of the main body. The housing includes a tail seal portion, a first connecting portion, and a first side seal portion. The tail seal portion and the first side seal portion are connected to a second lateral face and a third lateral face of the main body respectively. The third lateral face is located between the second lateral face and the first lateral face disposed opposite to each other. The first side seal portion is connected to the tail seal portion by the first connecting portion. The tail seal portion is configured to be folded in a first direction, and the first side seal portion is configured to be folded in a second direction, so that the first connecting portion closely fits the second lateral face of the main body. The first direction is perpendicular to a direction from the first lateral face to the second lateral face. The first direction is opposite to the second direction. In this way, this application can increase the energy density.

## Description

### TECHNICAL FIELD

This application relates to the technical field of energy storage, and in particular, to an electrochemical device, a battery module, and an electronic device.

### BACKGROUND

With the rapid development of electronic products and electric tool industries, many electronic products such as mobile phones are developing a trend toward portability and miniaturization. The space left for an electrochemical device in such electronic products is increasingly limited. Therefore, how to increase the energy density of the electrochemical device in a limited space is becoming increasingly important. Currently, an electrochemical device typically includes an electrode assembly and an aluminum laminated film that wraps the electrode assembly. The edges of the aluminum laminated film usually need to be sealed so that an electrolyte solution can be carried inside a housing formed by the aluminum laminated film. However, the edges of the housing occupy some space, thereby resulting in a decrease in energy density and bringing inconvenience.

### SUMMARY

A main objective to be achieved by this application is to provide an electrochemical device, a battery module, and an electronic device to reduce the area occupied by the electrochemical device and increase the energy density.

To achieve the above objective, a technical solution disclosed in this application is to provide an electrochemical device. The electrochemical device includes an electrode assembly, a tab, and a housing. The housing includes a main body. The electrode assembly is accommodated in the housing. One end of the tab is connected to the electrode assembly. Another end of the tab extends out from a first lateral face of the main body. The housing includes a tail seal portion, a first connecting portion, and a first side seal portion. The tail seal portion is connected to a second lateral face of the main body. The first side seal portion is connected to a third lateral face of the main body. The first lateral face and the second lateral face are disposed opposite to each other. The third lateral face is located between the second lateral face and the first lateral face. The first side seal portion is connected to the tail seal portion by the first connecting portion. The tail seal portion is configured to be folded in a first direction, and the first side seal portion is configured to be folded in a second direction, so that the first connecting portion closely fits the second lateral face of the main body. The first direction is perpendicular to a direction from the first lateral face to the second lateral face, and the first direction is opposite to the second direction.

The first connecting portion includes a first part. The first part is an overlap part at which the first connecting portion overlaps the tail seal portion. The first part includes a first edge. The first edge is an end edge by which the first connecting portion is connected to the tail seal portion. The tail seal portion includes a first seal edge. The first seal edge is an end edge by which the tail seal portion is concatenated to the main body. An angle between the first edge and the first seal edge is α, and the angle α is less than 90°.

Optionally, the angle α ranges from 30° to 60°.

Optionally, the first connecting portion further includes a second part. The second part is connected to the first part. The second part includes a second edge and a third edge disposed opposite to each other. The third edge is an end edge by which the second part is connected to the first part. The main body includes a first surface. The first surface is an end face of the main body, the end face being closest to the second edge in the second direction. Along the second direction, a distance between the second edge and the third edge is d₁, and a distance between the third edge and the first surface is d₂, satisfying: d₂ ≥ d₁.

Optionally, the tail seal portion further includes a second seal edge. The second seal edge and the first seal edge are two edges disposed opposite to each other. The main body further includes a second surface. The second surface is an end face of the main body, the end face being closest to the second seal edge in the first direction. Along the first direction, a distance between the first seal edge and the second seal edge is d₃, and a distance between the first seal edge and the second surface is d₄, satisfying: d₄ ≥ d₃.

Optionally, the first side seal portion includes a third seal edge and a fourth seal edge disposed opposite to each other. The third seal edge is an end edge by which the first side seal portion is concatenated to the main body. Along the second direction, a distance between the third seal edge and the fourth seal edge is d₅, and a distance between the third seal edge and the first surface is d₆, satisfying: d₆ ≥ d₅.

Optionally, the main body includes a fourth lateral face. The fourth lateral face is disposed opposite to the third lateral face. The housing further includes a second connecting portion and a second side seal portion. The second side seal portion is connected to the fourth lateral face of the main body, and the second side seal portion is connected to the tail seal portion by the second connecting portion. The second side seal portion is configured to be folded in the second direction, so that the second connecting portion closely fits the second lateral face of the main body.

Optionally, the housing further includes a top seal portion. The top seal portion is connected to the first lateral face of the main body. The top seal portion and the tail seal portion are located at two opposite ends of the main body respectively. One end of the tab is connected to the electrode assembly, and another end of the tab passes out of the housing from the top seal portion.

Optionally, the electrode assembly includes a first electrode plate, a second electrode plate, and a separator. The separator is located between the first electrode plate and the second electrode plate. The first electrode plate, the separator, and the second electrode plate are stacked and wound.

To achieve the above objective, another technical solution disclosed in this application is to provide a battery module. The battery module includes the electrochemical device disclosed in any one of the above embodiments.

To achieve the above objective, another technical solution disclosed in this application is to provide an electronic device. The electronic device includes the electrochemical device disclosed in any one of the above embodiments or the battery module.

Beneficial effects of this application are as follows: different from the prior art, the electrochemical device provided in this application includes an electrode assembly, a tab, and a housing. The housing includes a main body. The electrode assembly is accommodated in the housing. One end of the tab is connected to the electrode assembly, and another end of the tab extends out from a first lateral face of the main body. Specifically, the housing further includes a tail seal portion, a first connecting portion, and a first side seal portion. The tail seal portion is connected to a second lateral face of the main body. The first side seal portion is connected to a third lateral face of the main body. The first lateral face and the second lateral face are disposed opposite to each other. The third lateral face is located between the second lateral face and the first lateral face. The first side seal portion is connected to the tail seal portion by the first connecting portion. The tail seal portion is configured to be folded in a first direction, and the first side seal portion is configured to be folded in a second direction, so that the first connecting portion closely fits the second lateral face of the main body. The first direction is perpendicular to a direction from the first lateral face to the second lateral face, and the first direction is opposite to the second direction. In this way, the main body of the housing can accommodate the electrode assembly. The tail seal portion, the first connecting portion, and the first side seal portion of the housing can fit onto the main body by folding, thereby reducing the area occupied by the electrochemical device. When being mounted, other components do not need to avoid the housing, thereby increasing the energy density.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a front view of an electrochemical device according to an embodiment of this application;
FIG. 2 is a three-dimensional diagram of an electrochemical device according to an embodiment of this application;
FIG. 3 is a close-up view of a part A shown in FIG. 2; and
FIG. 4 is a bottom view of an electrochemical device according to an embodiment of this application.

List of reference numerals:
100. electrochemical device;
10. housing; 11. main body; 111. first lateral face; 112. second lateral face; 113. third lateral face; 114. fourth lateral face; 115. first surface; 116. second surface; 12. tail seal portion; 121. first seal edge; 122. second seal edge; 13. first connecting portion; 131. first part; 1311. first edge; 132. second part; 1321. second edge; 1322. third edge; 14. first side seal portion; 141. third seal edge; 142. fourth seal edge; 15. second connecting portion; 16. first side seal portion; 17. top seal portion; 20. tab;
X. first direction; Y second direction.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

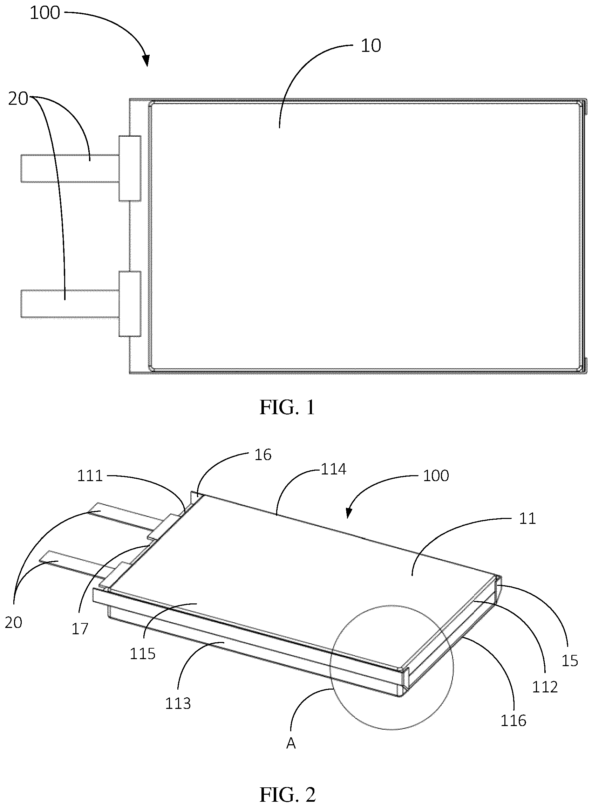

Referring to FIG. 1 and FIG. 2, an embodiment of this application provides an electrochemical device 100. The electrochemical device 100 includes a housing 10, an electrode assembly (not shown in the drawing), and a tab 20. The electrode assembly is accommodated in the housing 10. One end of the tab 20 is connected to the electrode assembly, and another end of the tab 20 extends out from the main body 11, and extends to the outside of the housing 10.

For the housing 10, referring to FIG. 2 to FIG. 4, the housing 10 includes a main body 11, a tail seal portion 12, a first connecting portion 13, and a first side seal portion 14. The electrode assembly is accommodated in the main body 11. The main body 11 includes a first lateral face 111, a second lateral face 112, a third lateral face 113, a fourth lateral face 114, a first surface 115, and a second surface 116. The first lateral face 111 is disposed opposite to the second lateral face 112, the third lateral face 113 is disposed opposite to the fourth lateral face 114. The third lateral face 113 and the fourth lateral face 114 are located between the second lateral face 112 and the first lateral face 111. The first surface 115 is disposed opposite to the second surface 116. The first surface 115 and the second surface 116 each are connected to the first lateral face 111, the second lateral face 112, the third lateral face 113, and the fourth lateral face 114.

The other end of the tab 20 extends out from the first lateral face 111 of the main body 11. The tail seal portion 12 is connected to the second lateral face 112 of the main body 11. The first side seal portion 14 is connected to the third lateral face 113 of the main body 11. The first side seal portion 14 is connected to the tail seal portion 12 by the first connecting portion 13. The tail seal portion 12 is configured to be folded in a first direction X, and the first side seal portion 14 is configured to be folded in a second direction Y, so that the first connecting portion 13 closely fits the second lateral face 112 of the main body 11. The first direction X is perpendicular to a direction from the first lateral face 111 to the second lateral face 112, and the first direction X is opposite to the second direction Y. In other words, the bending direction of the first side seal portion 14 is opposite to the bending direction of the tail seal portion 12.

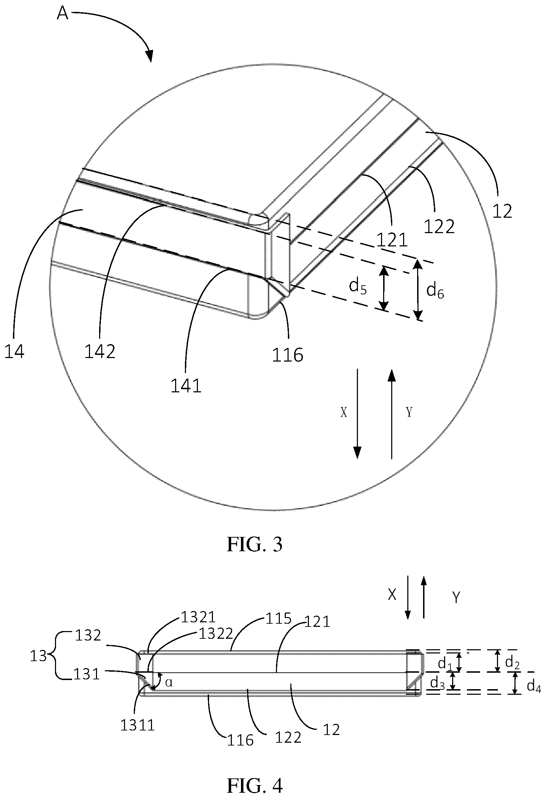

For the tail seal portion 12, referring to FIG. 3 and FIG. 4, the tail seal portion 12 includes a first seal edge 121 and a second seal edge 122. The first seal edge 121 is an end edge by which the tail seal portion 12 is concatenated to the main body 11. The second seal edge 122 is disposed opposite to the first seal edge 121. In the first direction X, the second seal edge 122 is closer to the second surface 116 than the first seal edge 121. In other words, the second surface 116 is an end face of the main body 11, the end face being closest to the second seal edge 122 in the first direction X. Along a direction perpendicular to the first direction, the length of the first seal edge 121 is greater than the length of the second seal edge 122. The tail seal portion 12 is trapezoidal in shape.

In some embodiments, along the first direction X, a distance between the first seal edge 121 and the second seal edge 122 is d₃, and a distance between the first seal edge 121 and the second surface 116 is d₄, satisfying: d₄ ≥ d₃. In this way, the tail seal portion 12 is prevented from protruding beyond the second surface 116 of the main body 11 along the first direction X. In contrast to a scenario in which the tail seal portion 12 protrudes beyond the second surface 116 of the main body 11 along the first direction X, the prevention of the tail seal portion 12 from protruding beyond the second surface 116 of the main body 11 along the first direction X can reduce the area occupied by the electrochemical device 100 and favorably increase the energy density.

For the first connecting portion 13, referring to FIG. 4, the first connecting portion 13 includes a first part 131 and a second part 132. The first part 131 is an overlap part at which the first connecting portion 13 overlaps the tail seal portion 12. The second part 132 is connected to the first part 131. The other end of the second part 132 is connected to the first side seal portion 14. The cross-section of the first part 131 along the first direction X is triangular in shape. Specifically, the first part 131 includes a first edge 1311. The first edge 1311 is an end edge by which the first connecting portion 13 is connected to the tail seal portion 12. An angle between the first edge 1311 and the first seal edge 121 is α, and the angle α is less than 90°. In some embodiments, the angle α ranges from 30° to 60°.

The cross-section of the second part 132 along the first direction X is rectangular in shape. Specifically, the second part 132 includes a second edge 1321 and a third edge 1322 disposed opposite to each other. The third edge 1322 is an end edge by which the second part 132 is connected to the first part 131. In the second direction Y, the second edge 1321 is closer to the first surface 115 than the third edge 1322. In other words, the first surface 115 is an end face of the main body 11, the end face being closest to the second edge 1321 in the second direction Y.

In some embodiments, along the second direction Y, a distance between the second edge 1321 and the third edge 1322 is d₁, and a distance between the third edge 1322 and the first surface 115 is d₂, satisfying: d₂ ≥ d₁. In this way, the first connecting portion 13 is prevented from protruding beyond the first surface 115 of the main body 11 along the second direction Y, thereby further reducing the area occupied by the electrochemical device 100, and favorably increasing the energy density.

For the first side seal portion 14, referring to FIG. 3, the first side seal portion 14 includes a third seal edge 141 and a fourth seal edge 142 disposed opposite to each other. The third seal edge 141 is an end edge by which the first side seal portion 14 is concatenated to the main body 11. The cross-section of the first side seal portion 14 along the first direction X is rectangular in shape.

In some embodiments, along the second direction Y, a distance between the third seal edge 141 and the fourth seal edge 142 is d₅, and a distance between the third seal edge 141 and the first surface 115 is d₆, satisfying: d₆ ≥ d₅. In this way, the first side seal portion 14 is prevented from protruding beyond the first surface 115 of the main body 11 along the second direction Y, thereby further reducing the area occupied by the electrochemical device, and favorably increasing the energy density.

It is hereby noted that even though the shape of the electrochemical device 100 in the drawing of the above embodiment is a regular hexahedron, this application is not limited to the illustrated example. In other embodiments of this application, the electrochemical device 100 and the housing 10 may be other shapes instead, as long as the tail seal portion 12, the first connecting portion 13, and the first side seal portion 14 thereof can be folded to fit onto the main body 11 during bending. For example, when the main body is in the shape of another polyhedron, the energy density can still be increased as long as the following conditions are met: the tail seal portion and the first side seal portion are connected to two adjacent surfaces of the main body respectively, and the tail seal portion and the first side seal portion are folded in opposite directions to fit onto the two adjacent surfaces respectively, and the first connecting portion connected to the tail seal portion and the first side seal portion is folded to closely fit any one of the two adjacent surfaces.

Still referring to FIG. 2, the housing 10 further includes a second connecting portion 15 and a second side seal portion 16. The second side seal portion 16 is connected to the fourth lateral face 114 of the main body 11. The second side seal portion 16 is connected to the tail seal portion 12 by the second connecting portion 15. The second side seal portion 16 is configured to be folded in the second direction Y, so that the second connecting portion 15 closely fits the second lateral face 112 of the main body 11, thereby reducing the area occupied by the electrochemical device 100 and favorably increasing the energy density.

Understandably, the structure of the second connecting portion 15 is similar to that of the first connecting portion 13, and is not described in detail here.

For the above electrode assembly, the electrode assembly includes a first electrode plate (not shown in the drawing), a second electrode plate (not shown in the drawing), and a separator (not shown in the drawing). The separator is located between the first electrode plate and the second electrode plate. The first electrode plate, the separator, and the second electrode plate are stacked and wound.

For the tab 20, referring to FIG. 2 again, there are two tabs 20. The housing 10 further includes a top seal portion 17. The top seal portion 17 is connected to the first lateral face 111 of the main body 11. The top seal portion 17 and the tail seal portion 12 are located at two opposite ends of the main body 11 respectively. Of the two tabs 20, one end of one tab is connected to the first electrode plate, and one end of the other tab is connected to the second electrode plate. Of the two tabs 20, the other end of one tab and the other end of the other tab pass out of the housing 10 through the first lateral face 111 of the main body 11 and the top seal portion 17.

The electrochemical device 100 provided in an embodiment of this application includes an electrode assembly, a tab 20, and a housing 10. The housing 10 includes a main body 11. The electrode assembly is accommodated in the main body 11. One end of the tab 20 is connected to the electrode assembly, and another end of the tab 20 extends out from a first lateral face 111 of the main body 11. Specifically, the housing 10 further includes a tail seal portion 12, a first connecting portion 13, and a first side seal portion 14. The tail seal portion 12 is connected to a second lateral face 112 of the main body 11. The first side seal portion 14 is connected to a third lateral face 113 of the main body 11. The first lateral face 111 and the second lateral face 112 are disposed opposite to each other. The third lateral face 113 is located between the second lateral face 112 and the first lateral face 111. The first side seal portion 14 is connected to the tail seal portion 12 by the first connecting portion 13. The tail seal portion 12 is configured to be folded in a first direction X, and the first side seal portion 14 is configured to be folded in a second direction Y, so that the first connecting portion 13 closely fits the second lateral face 112 of the main body 11. The first direction X is perpendicular to a direction from the first lateral face 111 to the second lateral face 112, and the first direction X is opposite to the second direction Y. In this way, the main body 11 of the housing 10 can accommodate the electrode assembly. The tail seal portion 12, the first connecting portion 13, and the first side seal portion 14 of the housing 10 can fit onto the main body 11 by folding, thereby reducing the area occupied by the electrochemical device 100. When being mounted, other components do not need to avoid the housing 10, thereby increasing the energy density.

An embodiment of this application further provides a battery module. The battery module includes the electrochemical device 100. The structure of the electrochemical device 100 may be learned by referring to the above embodiment, details of which are omitted here.

An embodiment of this application further provides an electronic device. The electronic device includes the electrochemical device 100 or the battery module. The structure of the electrochemical device 100 or the battery module may be learned by referring to the above embodiment, details of which are omitted here. In this embodiment, the electronic device is a mobile phone. Understandably, in other embodiments of this application, the electronic device may be a tablet computer, a computer, an unmanned aerial vehicle, or another electrical device that needs to be powered by electricity.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. An electrochemical device, comprising an electrode assembly, a tab, and a housing, wherein the housing comprises a main body, the electrode assembly is accommodated in the housing, one end of the tab is connected to the electrode assembly, and another end of the tab extends out from a first lateral face of the main body, **characterized in that**:
the housing comprises a tail seal portion, a first connecting portion, and a first side seal portion; the tail seal portion is connected to a second lateral face of the main body; the first side seal portion is connected to a third lateral face of the main body; the first lateral face and the second lateral face are disposed opposite to each other; the third lateral face is located between the second lateral face and the first lateral face; and the first side seal portion is connected to the tail seal portion by the first connecting portion; and
the tail seal portion is configured to be folded in a first direction, and the first side seal portion is configured to be folded in a second direction, so that the first connecting portion closely fits the second lateral face of the main body, wherein the first direction is perpendicular to a direction from the first lateral face to the second lateral face, and the first direction is opposite to the second direction.

2. The electrochemical device according to claim 1, **characterized in that** the first connecting portion comprises a first part, the first part is an overlap part at which the first connecting portion overlaps the tail seal portion, the first part comprises a first edge, the first edge is an end edge by which the first connecting portion is connected to the tail seal portion, the tail seal portion comprises a first seal edge, the first seal edge is an end edge by which the tail seal portion is concatenated to the main body, an angle between the first edge and the first seal edge is α, and the angle α is less than 90°.

3. The electrochemical device according to claim 2, **characterized in that** the angle α ranges from 30° to 60°.

4. The electrochemical device according to claim 2, **characterized in that** the first connecting portion further comprises a second part, the second part is connected to the first part, the second part comprises a second edge and a third edge disposed opposite to each other, and the third edge is an end edge by which the second part is connected to the first part; the main body comprises a first surface, and the first surface is an end face of the main body, the end face being closest to the second edge in the second direction; and
along the second direction, a distance between the second edge and the third edge is d₁, and a distance between the third edge and the first surface is d₂, satisfying: d₂ ≥ d₁.

5. The electrochemical device according to claim 2, **characterized in that** the tail seal portion further comprises a second seal edge, the second seal edge and the first seal edge are two edges disposed opposite to each other, the main body further comprises a second surface, and the second surface is an end face of the main body, the end face being closest to the second seal edge in the first direction; and
along the first direction, a distance between the first seal edge and the second seal edge is d₃, and a distance between the first seal edge and the second surface is d₄, satisfying: d₄ ≥ d₃.

6. The electrochemical device according to claim 4, **characterized in that** the first side seal portion comprises a third seal edge and a fourth seal edge disposed opposite to each other, and the third seal edge is an end edge by which the first side seal portion is concatenated to the main body; and
along the second direction, a distance between the third seal edge and the fourth seal edge is d₅, and a distance between the third seal edge and the first surface is d₆, satisfying: d₆ ≥ d₅.

7. The electrochemical device according to claim 1, **characterized in that**
the main body comprises a fourth lateral face, and the fourth lateral face is disposed opposite to the third lateral face;
the housing further comprises a second connecting portion and a second side seal portion, the second side seal portion is connected to the fourth lateral face of the main body, and the second side seal portion is connected to the tail seal portion by the second connecting portion; and
the second side seal portion is configured to be folded in the second direction, so that the second connecting portion closely fits the second lateral face of the main body.

8. The electrochemical device according to claim 1, **characterized in that** the housing further comprises a top seal portion, the top seal portion is connected to the first lateral face of the main body, and the top seal portion and the tail seal portion are located at two opposite ends of the main body respectively; and
one end of the tab is connected to the electrode assembly, and another end of the tab passes out of the housing from the top seal portion.

9. The electrochemical device according to claim 1, **characterized in that** the electrode assembly comprises a first electrode plate, a second electrode plate, and a separator; the separator is located between the first electrode plate and the second electrode plate; and the first electrode plate, the separator, and the second electrode plate are stacked and wound.

10. A battery module, **characterized in that** the battery module comprises the electrochemical device according to any one of claims 1 to 9.

11. An electronic device, **characterized in that** the electronic device comprises the electrochemical device according to any one of claims 1 to 9 or the battery module according to claim 10.
